# EUROPÄISCHE PATENTSCHRIFT

(11) **EP 3 660 339 B1**
(45) Veröffentlichungstag und Bekanntmachung des Hinweises auf die Patenterteilung: **21.09.2022**
(21) Anmeldenummer: 19212035.0
(22) Anmeldetag: 28.11.2019
(51) Int. Cl.: F16B 5/02, F16B 5/06, F16B 2/22

(54) **TOLERANZAUSGLEICHSVORRICHTUNG**
TOLERANCE COMPENSATING DEVICE
DISPOSITIF DE COMPENSATION DE TOLÉRANCE

(30) Priorität: 29.11.2018 DE 102018130388
(43) Veröffentlichungstag der Anmeldung: 03.06.2020
(73) Patentinhaber: Witte Automotive GmbH, 42551 Velbert (DE)
(72) Erfinder: Erpenbeck, Till, 42555 Velbert (DE)
(74) Vertreter: Manitz Finsterwald Patent- und Rechtsanwaltspartnerschaft mbB

(56) Entgegenhaltungen:
- DE-A1- 4 224 575
- DE-A1-102008 055 526
- DE-A1-102013 202 582
- DE-A1-102015 104 963

## Beschreibung

Die vorliegende Erfindung betrifft eine Vorrichtung zum Ausgleichen von Toleranzen zwischen zwei mittels einer Verbindungsschraube zu verbindenden Bauteilen, umfassend ein Grundelement, ein aus dem Grundelement herausbewegbares Ausgleichselement, wobei das Grundelement und das Ausgleichselement einen eine axiale Richtung definierenden Durchgang für die Verbindungsschraube ausbilden, und ein Halteelement zum Halten des Grundelements.

Eine Toleranzausgleichsvorrichtung mit den Merkmalen des Oberbegriffs des Anspruchs 1 ist aus der DE 10 2015 104 963 A1 bekannt. Überdies offenbaren die DE 10 2008 055 526 A1, DE 10 2013 202 582 A1 sowie DE 42 24 575 A1 jeweils eine Toleranzausgleichsvorrichtung.

Üblicherweise stehen das Grundelement und das Ausgleichselement in einem Linksgewindeeingriff, während die Verbindungsschraube ein rechtsgängiges Außengewinde aufweist. In dem Ausgleichselement ist ein Federelement angeordnet, welches einen Reibschluss zwischen der sich durch den Durchgang hindurch erstreckenden Verbindungsschraube und dem Ausgleichselement herstellt. An dem Halteelement sind sich axial erstreckende Rastbeinchen ausgebildet, die zur Vormontage der Toleranzausgleichsvorrichtung an einem ersten der Bauteile in zu diesem Zweck in dem ersten Bauteil vorgesehene Rastöffnungen eingeclipst werden. Außerdem ist an dem ersten Bauteil ein Mutternelement für die Verbindungsschraube drehfest angebracht. Wird die Verbindungsschraube zur Verschraubung der Bauteile durch die Bauteile und die Toleranzausgleichsvorrichtung hindurch geführt und in das Mutternelement eingeschraubt, so dreht sich das Ausgleichselement aufgrund des Reibschlusses aus dem Grundelement heraus, bis es an dem zweiten Bauteil anstößt und der Abstand zwischen den Bauteilen durch die Toleranzausgleichsvorrichtung überbrückt ist.

Der Erfindung liegt die Aufgabe zugrunde, eine Toleranzausgleichsvorrichtung der eingangs genannten Art zu schaffen, welche sich ohne eine besondere Vorbereitung des ersten Bauteils an diesem vormontieren lässt.

Die Aufgabe wird durch eine Toleranzausgleichsvorrichtung mit den Merkmalen des Anspruchs 1 und insbesondere dadurch gelöst, dass das Halteelement einen Rastabschnitt zur Verrastung an einem für die Verbindungsschraube vorgesehenen Mutternelement ausbildet, wobei der Rastabschnitt im Querschnitt gesehen C-förmig ausgebildet ist und zwei zueinander beabstandete Rastarme umfasst, welche zwischen sich eine Aufnahme für das Mutternelement definieren, welche elastisch ausgebildet oder gelagert sind und welche sich beim Aufschieben in radialer Richtung auf das Mutternelement zur Aufnahme des Mutternelements entgegen einer Rückstellkraft aufspreizen lassen.

Der Erfindung liegt der allgemeine Gedanke zugrunde, das Halteelement nicht direkt in einem ersten der Bauteile zu verrasten, sondern hierfür das an dem ersten Bauteil ohnehin vorgesehene Mutternelement zu verwenden. Die Verrastung der erfindungsgemäßen Toleranzausgleichsvorrichtung erfolgt also lediglich indirekt an dem ersten Bauteil, sodass das erste Bauteil nicht speziell für die Verrastung vorbereitet zu werden braucht. Dies vereinfacht zum einen die Vormontage der Toleranzausgleichsvorrichtung, da das erste Bauteil nicht mit Rastöffnungen versehen zu werden braucht, und vermeidet zum anderen eine Schwächung des ersten Bauteils durch derartige Rastöffnungen.

Vorteilhafte Ausbildungen der Erfindung sind den Unteransprüchen, der Beschreibung und der Zeichnung zu entnehmen.

Gemäß einer Ausführungsform erstreckt sich der Rastabschnitt quer, insbesondere rechtwinklig zu der axialen Richtung. Zur Verrastung an dem Mutternelement kann die Toleranzausgleichsvorrichtung somit von der Seite her, gewissermaßen also radial, auf das erste Bauteil aufgeschoben werden, wodurch eine Vormontage der Toleranzausgleichsvorrichtung an dem ersten Bauteil auch unter beschränkten räumlichen Gegebenheiten möglich ist.

Gemäß einer weiteren Ausführungsform ist das Halteelement im Längsschnitt gesehen C-förmig ausgebildet, insbesondere derart, dass es einen sich radial erstreckenden Aufnahmeraum zur Aufnahme des ersten Bauteils ausbildet. Auf diese Weise kann das Halteelement seitlich auf das erste Bauteil aufgeschoben werden und das erste Bauteil oben und unten umgreifen.

Bevorzugt ist der Rastabschnitt in axialer Richtung gesehen zu einem Halteabschnitt des Halteelements beabstandet, in welchem das Grundelement gehalten ist. Auf diese Weise kommen der Rastabschnitt und der Halteabschnitt auf gegenüberliegenden Seiten des ersten Bauteils zu liegen, wodurch die Toleranzausgleichsvorrichtung im Vormontagezustand zuverlässiger an dem ersten Bauteil gesichert ist.

Zur Erleichterung der Montage der Toleranzausgleichsvorrichtung an dem ersten Bauteil sind bzw. ist der Rastabschnitt und/oder der Halteabschnitt vorteilhafterweise mit Einführschrägen versehen.

Gemäß einer weiteren Ausführungsform sind der Rastabschnitt und der Halteabschnitt durch einen Verbindungsabschnitt miteinander verbunden. Der Verbindungsabschnitt bildet gewissermaßen das Rückgrat des Halteelements und erstreckt sich bevorzugt in der axialen Richtung.

Vorteilhafterweise ist der Verbindungsabschnitt im Wesentlichen quaderförmig ausgebildet. Dies erleichtert eine korrekte Ausrichtung der Toleranzausgleichsvorrichtung in einem Magazin sowie die Handhabung der Toleranzausgleichsvorrichtung mittels eines Roboters. Eine Verkantung der Toleranzausgleichsvorrichtung in einem Magazin kann außerdem dadurch noch wirksamer verhindert werden, wenn der Verbindungsabschnitt an gegenüberliegenden Seitenflächen vorspringende Führungselemente ausbildet. Bevorzugt sind an jeder Seitenfläche zwei axial beabstandete Führungselemente ausgebildet. Ferner kann zumindest eines der Führungselemente prismenartig oder walmdachartig ausgebildet sein. Es ist auch denkbar, dass mindestens ein Führungselement in Form einer Einkerbung ausgebildet ist.

Gemäß einer besonders wirtschaftlich herstellbaren Ausführungsform ist das Halteelement einstückig ausgebildet. Beispielsweise kann das Halteelement ein Kunststoffmaterial aufweisen. Insbesondere kann es sich hierbei um ein Spritzgussteil handeln.

Gemäß noch einer weiteren Ausführungsform ist ein ferromagnetischer Einsatz in das Halteelement, insbesondere in einen Verbindungsabschnitt des Halteelements, eingelassen. Dies erleichtert die Handhabung der Toleranzausgleichsvorrichtung mittels eines Roboters und trägt somit zu einer noch einfacheren Vormontage der Toleranzausgleichsvorrichtung an dem ersten Bauteil bei.

Gemäß noch einer weiteren Ausführungsform weist das Halteelement eine T-Nut auf. Insbesondere kann die T-Nut sich in der axialen Richtung erstrecken und/oder an einer dem Rastabschnitt entgegengesetzten Rückseite eines Verbindungsabschnitts des Halteelements ausgebildet sein. Eine solche T-Nut ermöglicht das Auffädeln der Toleranzausgleichsvorrichtung und vorzugsweise einer Vielzahl von Toleranzausgleichsvorrichtungen zu Zwecken des Transports und/oder der Lagerung auf einem entsprechend ausgebildeten T-Träger oder einem Trägerband. Ist das Trägerband flexibel ausgebildet, so eignet es sich außerdem besonders gut dafür, die darauf aufgefädelten Toleranzausgleichsvorrichtungen für eine automatisierte Vormontage der Toleranzausgleichsvorrichtungen einem Roboter zuzuführen.

Nachfolgend wird die Erfindung rein beispielhaft anhand einer möglichen Ausführungsform unter Bezugnahme auf die Zeichnung beschrieben. Es zeigen:
- Fig. 1A und 1B: perspektivische Ansichten einer Toleranzausgleichsvorrichtung gemäß einer ersten Ausführungsform der Erfindung;
- Fig. 2: eine Explosionsansicht der Toleranzausgleichsvorrichtung von Fig. 1;
- Fig. 3A: eine perspektivische Ansicht der Toleranzausgleichsvorrichtung von Fig. 1 in einem teilweise an einem Bauteil vormontierten Zustand;
- Fig. 3B: eine Draufsicht von unten auf die Toleranzausgleichsvorrichtung von Fig. 1 in einem teilweise an einem Bauteil vormontierten Zustand;
- Fig. 4: eine Draufsicht von unten auf die Toleranzausgleichsvorrichtung von Fig. 1 in einem vollständig an einem Bauteil vormontierten Zustand;
- Fig. 5A und 5B: perspektivische Ansichten mehrerer Toleranzausgleichsvorrichtungen von Fig. 1, welche auf einen T-Träger aufgefädelt sind;
- Fig. 6A bis 6D: verschiedene Ansichten mehrerer Toleranzausgleichsvorrichtungen von Fig. 1, welche auf ein flexibles Trägerband aufgefädelt sind;
- Fig. 7: eine Toleranzausgleichsvorrichtung gemäß einer zweiten Ausführungsform der Erfindung;
- Fig. 8: ein Magazin zur Aufnahme von Toleranzausgleichsvorrichtungen gemäß Fig. 1 oder 7;
- Fig. 9: eine Toleranzausgleichsvorrichtung gemäß einer dritten Ausführungsform der Erfindung;
- Fig. 10: eine Toleranzausgleichsvorrichtung gemäß einer vierten Ausführungsform der Erfindung.

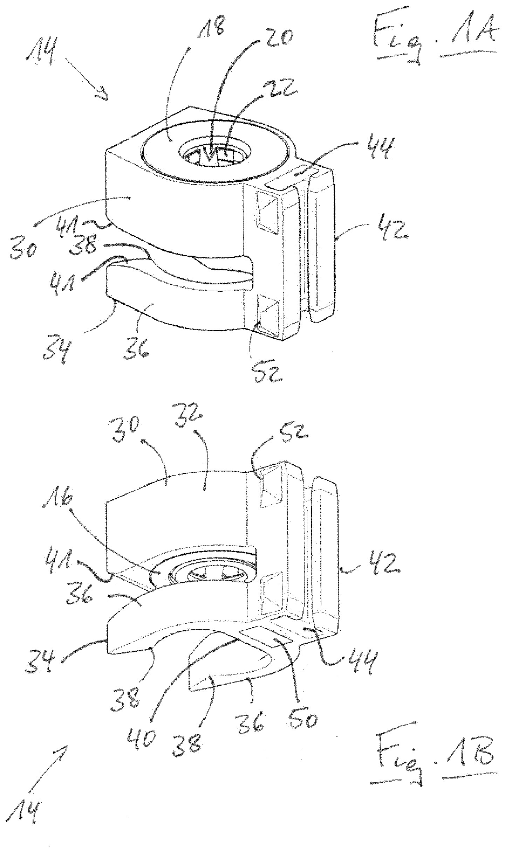

In Fig. 1 bis 4 ist eine Toleranzausgleichsvorrichtung 14 gemäß einer ersten Ausführungsform dargestellt. Die Toleranzausgleichsvorrichtung 14 umfasst ein Grundelement 16 sowie ein mit diesem in Linksgewindeeingriff stehendes Ausgleichselement 18. Das Grundelement 16 bildet zu diesem Zweck ein linksgängiges Innengewinde 16a aus, während das Ausgleichselement 18 ein entsprechend ausgebildetes Außengewinde 18a aufweist. Die Gewindeachsen des Innengewindes 16a und des Außengewindes 18a definieren eine axiale Richtung.

Das Grundelement 16 und das Ausgleichselement 18 bilden einen sich in der axialen Richtung erstreckenden Durchgang 20 für eine nicht dargestellte Verbindungsschraube aus. In den durch das Ausgleichselement 18 definierten Teil des Durchgangs 20 ist ein Federelement 22 eingesetzt, welches zur Herstellung eines Reibschlusses zwischen der sich durch den Durchgang 20 hindurch erstreckenden Verbindungsschraube und dem Ausgleichselement 18 vorgesehen ist.

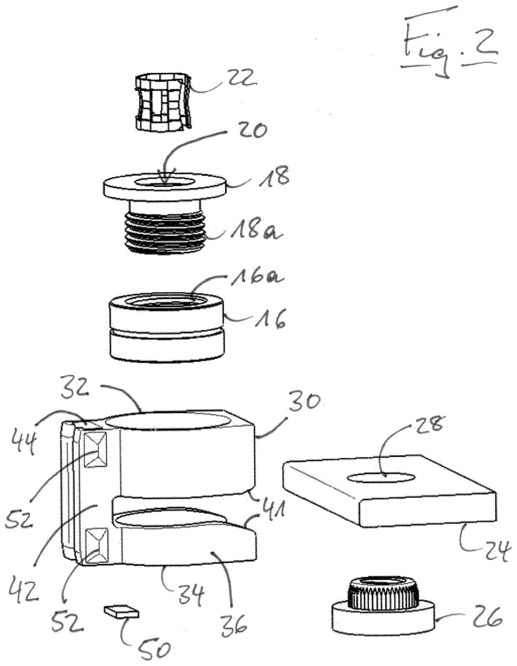

Die Verbindungsschraube dient zur Verschraubung zweier zueinander beabstandet angeordneter Bauteile, von denen in Fig. 2 ein erstes Bauteil 24 gezeigt ist. An dem ersten Bauteil 24 ist ein Mutternelement 26 für die Verbindungsschraube drehfest angebracht.

Im vorliegenden Ausführungsbeispiel handelt es sich bei dem Mutternelement 26 um eine Einpressmutter, welche in eine entsprechend vorgesehene Aufnahmebohrung 28 des ersten Bauteils 24 eingepresst ist. In diesem Kontext werden unter dem Begriff "Einpressmutter" auch Setzmuttern, Bliednietmuttern, Bördelmuttern, (Ein-)Schlagmuttern, etc. verstanden. Darüber hinaus ist es denkbar, das Mutternelement 26 auch auf andere Weise an dem ersten Bauteil 24 zu befestigen, beispielsweise mittels Kleben oder Schweißen.

Die Toleranzausgleichsvorrichtung 14 umfasst ferner ein aus einem Kunststoffmaterial gebildetes Halteelement 30, in welchem das Grundelement 16 drehfest gehalten ist. Im vorliegenden Ausführungsbeispiel ist das Grundelement 16 in das Halteelement 30 eingepresst. Es ist aber ebenso denkbar, das Grundelement 16 in das Halteelement 30 einzukleben oder das Halteelement 30 auf das Grundelement 16 aufzuschrumpfen oder aufzuspritzen. Konkret sitzt das Grundelement 16 in einem Halteabschnitt 32 des Halteelements 30, welcher sich im Wesentlichen rechtwinklig zu der axialen Richtung erstreckt.

Des Weiteren bildet das Halteelement 30 einen Rastabschnitt 34 aus, welcher sich ebenfalls im Wesentlichen rechtwinklig zu der axialen Richtung erstreckt. Der Rastabschnitt 34 weist einen axialen Abstand zu dem Halteabschnitt 32 auf, der an die Stärke bzw. Dicke des ersten Bauteils 24 angepasst ist.

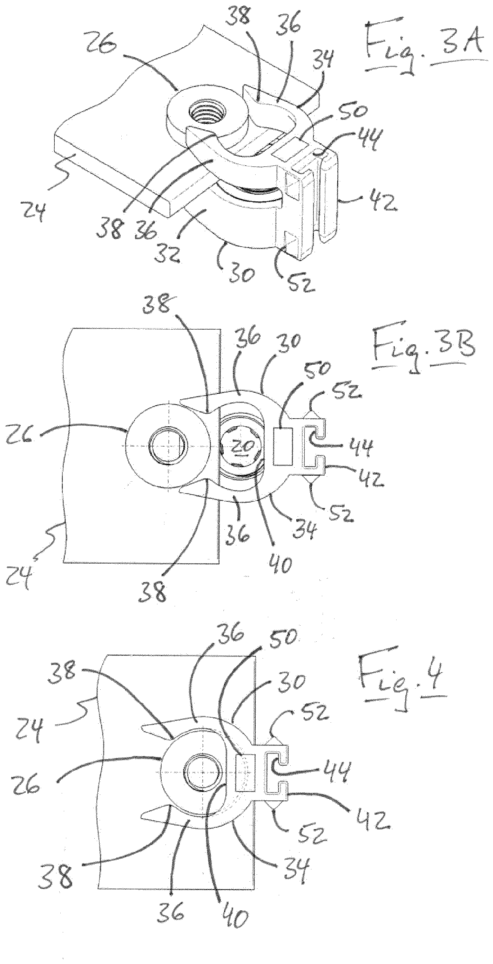

Der Rastabschnitt 34 umfasst zwei zueinander beabstandete, leicht aufeinander zu gekrümmte Rastarme 36, welche zwischen sich eine Aufnahme für das Mutternelement 26 definieren. Die Rastarme 36 weisen eine gewisse Elastizität derart auf, dass sie sich beim Aufschieben in radialer Richtung auf das Mutternelement 26 entgegen einer Rückstellkraft aufspreizen lassen und wieder in ihrer Ruhelage zurückfedern, sobald das Mutternelement 26 in der Aufnahme aufgenommen ist (Fig. 4). Um ein unbeabsichtigtes Lösen des Rastabschnitts 34 von dem aufgenommenen Mutternelement 26 zu verhindern, weisen die Rastarme 36 im Bereich ihrer freien Enden einander zugewandte Rastvorsprünge 38 auf. Für eine Versteifung der Rastarme 36 sind diese im Bereich ihrer Basis durch ein Versteifungselement 40 verbunden, welches das in der Aufnahme aufgenommene Mutternelement 26 teilweise überragt.

Für die Vormontage der Toleranzausgleichsvorrichtung 14 an dem ersten Bauteil 24 wird die Toleranzausgleichsvorrichtung 14 seitlich, das heißt also in radialer Richtung, derart auf das erste Bauteil 24 aufgeschoben, dass das erste Bauteil zwischen dem Halteabschnitt 32 und dem Rastabschnitt 34 aufgenommen wird und der Rastabschnitt 34 mit dem Mutternelement 26 verrastet, wie es in Fig. 3 und 4 dargestellt ist. Um das Aufschieben der Toleranzausgleichsvorrichtung 14 auf das erste Bauteil 24 zu erleichtern, sind sowohl im Bereich der freien Enden der Rastarme 36 als auch in dem korrespondierenden Bereich des Halteabschnitts 32 Einführschrägen 41 ausgebildet.

Die Toleranzausgleichsvorrichtung 14 braucht im vormontierten Zustand nicht notwendigerweise spielfrei an dem Bauteil 24 zu sitzen. Vielmehr ist ein gewisses Spiel der an dem Mutternelement 26 verrasteten Toleranzausgleichsvorrichtung 14 zumindest in radialer Richtung, unter Umständen aber auch in axialer Richtung, erwünscht, da hierdurch die nachfolgende Verschraubung der Bauteile, insbesondere die Ausrichtung der Toleranzausgleichsvorrichtung 14 mit der Verbindungsschraube, erleichtert wird.

Zur Verschraubung der Bauteile wird die Verbindungsschraube durch eine entsprechende Bohrung des nicht dargestellten Bauteils hindurch gesteckt und (in Fig. 1 von oben) durch den Durchgang 20 der Toleranzausgleichsvorrichtung 14 hindurch geführt und in das Mutternelement 26 eingeschraubt. Aufgrund der gegenläufigen Gewinde von Verbindungsschraube und Toleranzausgleichsvorrichtung 14 wird während des Einschraubens der Verbindungsschraube in das Mutternelement 26 das Ausgleichselement 18 durch den durch das Federelement 22 hergestellten Reibschluss aus dem Grundelement 16 herausgedreht, bis es an dem nicht dargestellten zweiten Bauteil anstößt. Ab diesem Zeitpunkt ist der Abstand zwischen den Bauteilen durch die ausgefahrene Toleranzausgleichsvorrichtung 14 überbrückt und die Bauteile können durch Anziehen der Verbindungsschraube miteinander verspannt werden.

Der Halteabschnitt 32 und der Rastabschnitt 34 sind durch einen sich in der axialen Richtung erstreckenden Verbindungsabschnitt 42 miteinander verbunden, welcher gewissermaßen das Rückgrat des Halteelements 30 bildet. Der Verbindungsabschnitt 42 weist eine quaderförmige Grundform auf und bildet an seiner den Rastarmen 36 abgewandten Rückseite eine T-Nut 44 aus.

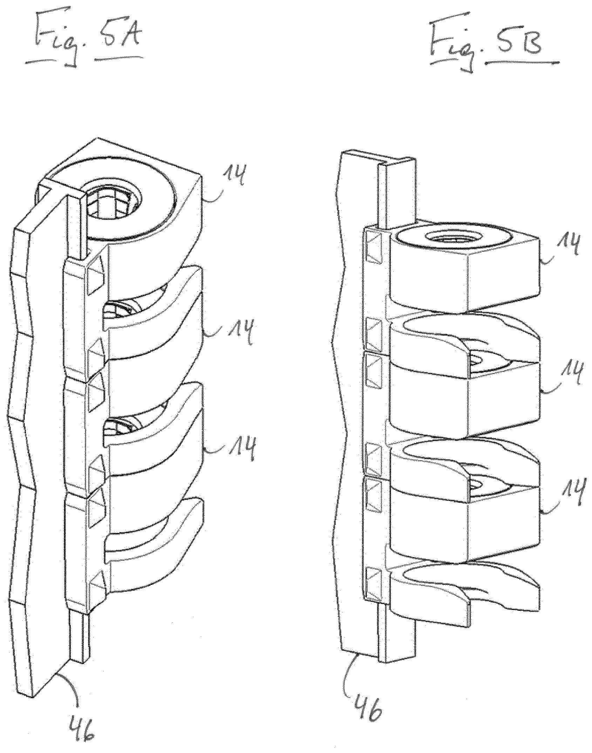

Mittels der T-Nut 44 lässt sich die Toleranzausgleichsvorrichtung 14 zu Transport- und/oder Lagerzwecken auf einen entsprechend ausgebildeten T-Träger 46 aufschieben, wie es in Fig. 5 anhand von drei Toleranzausgleichsvorrichtungen 14 dargestellt ist.

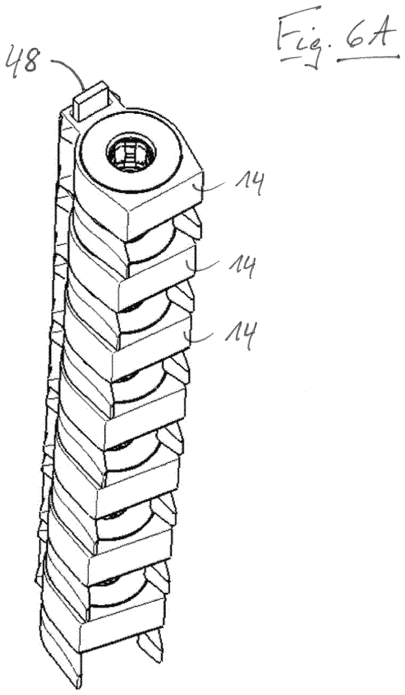

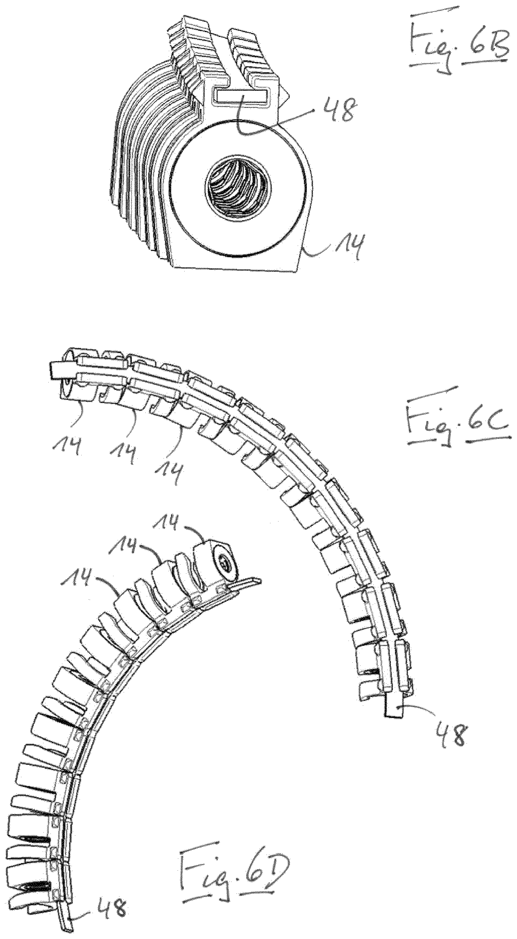

Alternativ ermöglicht die T-Nut 44 ein Auffädeln der Toleranzausgleichsvorrichtung 14 auf ein flexibles Trägerband 48. Fig. 6 zeigt ein derartiges Trägerband 48 mit einer Vielzahl von darauf aufgefädelten Toleranzausgleichsvorrichtungen 14. Eine solche Konfiguration eignet sich beispielsweise, um die Toleranzausgleichsvorrichtungen 14 einem Roboter für eine automatisierte Vormontage der Toleranzausgleichsvorrichtungen 14 an einem oder mehreren Bauteilen 24 zuzuführen. Grundsätzlich kann es sich bei einem solchen Roboter um einen Greifroboter handeln. Alternativ oder zusätzlich kann der Roboter aber auch über einen Magneten zum Halten der Toleranzausgleichsvorrichtungen 14 verfügen. Für ein Zusammenwirken mit dem Magneten des Roboters ist ein Einsatz 50 aus einem ferromagnetischen Material, beispielsweise einem Stahlblech, in das Halteelement 30 eingelassen, im vorliegenden Ausführungsbeispiel im Bereich zwischen der T-Nut 44 und dem Versteifungselement 40.

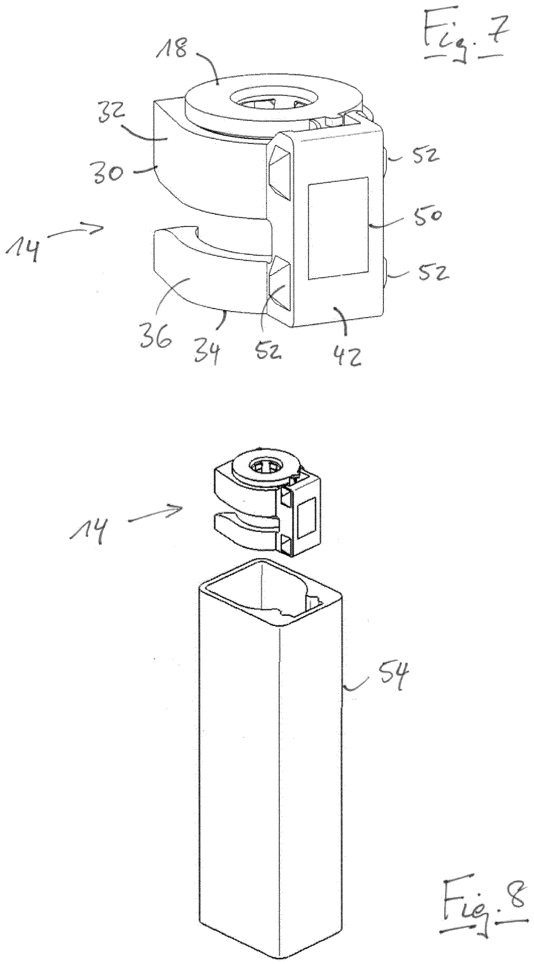

An gegenüberliegenden Außenseiten des Verbindungsabschnitts 42 sind außerdem jeweils zwei axial beabstandete prismenartige oder walmdachartige Führungselemente 52 vorgesehen, die der zusätzlichen Führung der Toleranzausgleichsvorrichtung 14 in einem Magazin 54 dienen, wie es in Fig. 8 dargestellt ist.

Fig. 7 zeigt eine Toleranzausgleichsvorrichtung 14 gemäß einer zweiten Ausführungsform, welche sich letztlich nur darin von der voranstehend beschriebenen ersten Ausführungsform unterscheidet, dass das Halteelement 30 keine T-Nut 44 aufweist, sondern stattdessen der Einsatz 50 aus ferromagnetischem Material in die den Rastarmen 36 abgewandte Rückseite des Verbindungsabschnitts 42 eingelassen ist.

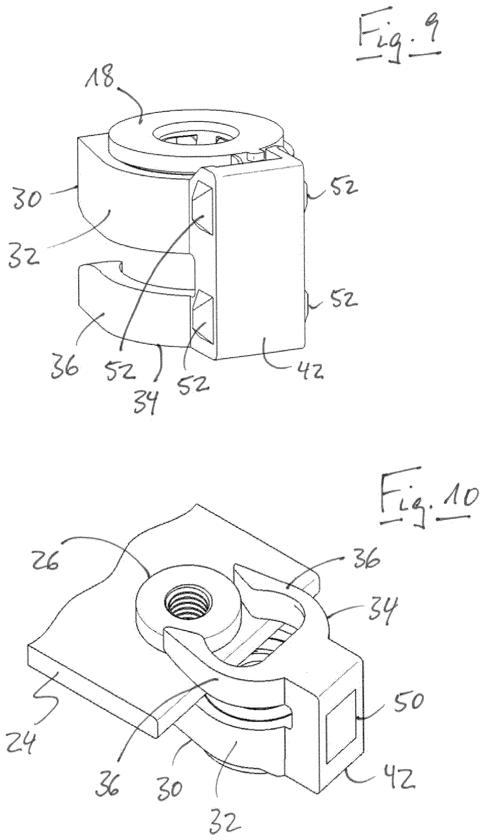

Es versteht sich, dass man auf den Einsatz 50 grundsätzlich auch verzichten kann, wie es anhand von der in Fig. 9 gezeigten Toleranzausgleichsvorrichtung 14 gemäß einer dritten Ausführungsform dargestellt ist, die sich ansonsten nicht von der in Fig. 7 gezeigten zweiten Ausführungsform unterscheidet.

Außerdem ist eine vierte Ausführungsform denkbar (Fig. 10), die zwar einen Einsatz 50 aber keine Führungselemente 52 aufweist und sich ansonsten nicht von der zweiten Ausführungsform unterscheidet.

### Bezuqszeichenliste

- 14: Toleranzausgleichsvorrichtung
- 16: Grundelement
- 18: Ausgleichselement
- 16a: Innengewinde
- 18a: Außengewinde
- 20: Durchgang
- 22: Federelement
- 24: erstes Bauteil
- 26: Mutternelement
- 28: Aufnahmebohrung
- 30: Halteelement
- 32: Halteabschnitt
- 34: Rastabschnitt
- 36: Rastarm
- 38: Rastvorsprung
- 40: Versteifungselement
- 41: Einführschräge
- 42: Verbindungsabschnitt
- 44: T-Nut
- 46: T-Träger
- 48: Trägerband
- 50: Einsatz
- 52: Führungselement
- 54: Magazin

## Patentansprüche

1. Vorrichtung (14) zum Ausgleichen von Toleranzen zwischen zwei mittels einer Verbindungsschraube zu verbindenden Bauteilen, umfassend ein Grundelement (16), ein aus dem Grundelement (16) herausbewegbares Ausgleichselement (18), wobei das Grundelement (16) und das Ausgleichselement (18) einen eine axiale Richtung definierenden Durchgang (20) für die Verbindungsschraube ausbilden, und ein Halteelement (30) zum Halten des Grundelements (16), wobei das Halteelement (30) einen Rastabschnitt (34) zur Verrastung an einem für die Verbindungsschraube vorgesehenen Mutternelement (26) ausbildet,
**dadurch gekennzeichnet, dass** der Rastabschnitt (34) im Querschnitt gesehen C-förmig ausgebildet ist und zwei zueinander beabstandete Rastarme (36) umfasst, welche zwischen sich eine Aufnahme für das Mutternelement (26) definieren, welche elastisch ausgebildet oder gelagert sind und welche sich beim Aufschieben in radialer Richtung auf das Mutternelement (26) zur Aufnahme des Mutternelements (26) entgegen einer Rückstellkraft aufspreizen lassen.

2. Vorrichtung (14) nach Anspruch 1,
**dadurch gekennzeichnet, dass** sich der Rastabschnitt (34) quer, insbesondere rechtwinklig zu der axialen Richtung, erstreckt.

3. Vorrichtung (14) nach zumindest einem der vorstehenden Ansprüche, **dadurch gekennzeichnet, dass**
das Halteelement (30) im Längsschnitt gesehen C-förmig ausgebildet ist und/oder das Halteelement (30) einen sich radial erstreckenden Aufnahmeraum zur Aufnahme eines der Bauteile (24) ausbildet.

4. Vorrichtung (14) nach zumindest einem der vorstehenden Ansprüche, **dadurch gekennzeichnet, dass**
der Rastabschnitt (34) in der axialen Richtung gesehen zu einem Halteabschnitt (32) des Halteelements (30) beabstandet ist, in welchem das Grundelement (16) gehalten ist.

5. Vorrichtung (14) nach Anspruch 4,
**dadurch gekennzeichnet, dass**
der Rastabschnitt (34) und/oder der Halteabschnitt (32) mit Einführschrägen (41) versehen sind bzw. ist.

6. Vorrichtung (14) nach Anspruch 4 oder 5,
**dadurch gekennzeichnet, dass**
der Rastabschnitt (34) und der Halteabschnitt (32) durch einen Verbindungsabschnitt (42) miteinander verbunden sind.

7. Vorrichtung (14) nach Anspruch 6,
**dadurch gekennzeichnet, dass**
der Verbindungsabschnitt (42) sich in der axialen Richtung erstreckt.

8. Vorrichtung (14) nach Anspruch 6 oder 7,
**dadurch gekennzeichnet, dass**
der Verbindungsabschnitt (42) im Wesentlichen quaderförmig ausgebildet ist.

9. Vorrichtung (14) nach zumindest einem der Ansprüche 6 bis 8,
**dadurch gekennzeichnet, dass**
der Verbindungsabschnitt (42) an gegenüberliegenden Seitenflächen vorspringende Führungselemente (52) ausbildet.

10. Vorrichtung (14) nach Anspruch 9,
**dadurch gekennzeichnet, dass**
an jeder Seitenfläche zwei axial beabstandete Führungselemente (52) ausgebildet sind.

11. Vorrichtung (14) nach Anspruch 9 oder 10,
**dadurch gekennzeichnet, dass**
zumindest eines der Führungselemente (52) prismenartig oder walmdachartig ausgebildet ist.

12. Vorrichtung (14) nach zumindest einem der vorstehenden Ansprüche,
**dadurch gekennzeichnet, dass**
das Halteelement (30) einstückig ausgebildet ist und/oder ein Kunststoffmaterial aufweist und/oder ein Spritzgussteil ist.

13. Vorrichtung (14) nach zumindest einem der vorstehenden Ansprüche,
**dadurch gekennzeichnet, dass**
ein ferromagnetischer Einsatz (50) in das Halteelement (30), insbesondere in einen Verbindungsabschnitt (42) des Halteelements (30), eingelassen ist; und/oder
das Halteelement (30) eine T-Nut (44) aufweist, insbesondere welche sich in der axialen Richtung erstreckt und/oder an einer dem Rastabschnitt (34) entgegengesetzten Rückseite eines Verbindungsabschnitts (42) des Halteelements (30) ausgebildet ist.

## Claims

1. An apparatus (14) for compensating for tolerances between two components to be connected by means of a connecting screw, said apparatus (14) comprising a base element (16); a compensating element (18) which can be moved out of the base element (16), with the base element (16) and the compensating element (18) forming a passage (20) for the connecting screw, said passage (20) defining an axial direction; and a retaining element (30) for retaining the base element (16), wherein the retaining element (30) forms a latching portion (34) for latching to a nut element (26) provided for the connecting screw,
**characterized in that**
the latching portion (34) is C-shaped, when viewed in cross-section, and comprises two latching arms (36) which are spaced apart from one another, which define a receiver for the nut element (26) therebetween, which are resiliently formed or supported and which can spread apart against a restoring force when pushed in a radial direction onto the nut element (26) in order to receive the nut element (26).

2. An apparatus (14) in accordance with claim 1,
**characterized in that**
the latching portion (34) extends transversely, in particular at a right angle, to the axial direction.

3. An apparatus (14) in accordance with at least one of the preceding claims, **characterized in that**
the retaining element (30) is C-shaped, when viewed in longitudinal section, and/or the retaining element (30) forms a radially extending receiving space for receiving one of the components (24).

4. An apparatus (14) in accordance with at least one of the preceding claims, **characterized in that**
the latching portion (34) is, when viewed in the axial direction, spaced apart from a retaining portion (32) of the retaining element (30) in which the base element (16) is retained.

5. An apparatus (14) in accordance with claim 4,
**characterized in that**
the latching portion (34) and/or the retaining portion (32) is/are provided with lead-in chamfers (41).

6. An apparatus (14) in accordance with claim 4 or claim 5,
**characterized in that**
the latching portion (34) and the retaining portion (32) are connected to one another by a connecting portion (42).

7. An apparatus (14) in accordance with claim 6,
**characterized in that**
the connecting portion (42) extends in the axial direction.

8. An apparatus (14) in accordance with claim 6 or claim 7,
**characterized in that**
the connecting portion (42) is substantially cuboid.

9. An apparatus (14) in accordance with at least one of the claims 6 to 8, **characterized in that**
the connecting portion (42) forms projecting guide elements (52) on oppositely disposed side faces.

10. An apparatus (14) in accordance with claim 9,
**characterized in that**
two axially spaced-apart guide elements (52) are formed on each side face.

11. An apparatus (14) in accordance with claim 9 or claim 10,
**characterized in that**
at least one of the guide elements (52) is formed in the manner of a prism or a hipped roof.

12. An apparatus (14) in accordance with at least one of the preceding claims, **characterized in that**
the retaining element (30) is integrally formed and/or has a plastics material and/or is an injection-molded part.

13. An apparatus (14) in accordance with at least one of the preceding claims,
**characterized in that**
a ferromagnetic insert (50) is embedded into the retaining element (30), in particular into a connecting portion (42) of the retaining element (30),
and/or
**in that** the retaining element (30) has a T-slot (44), in particular which extends in the axial direction and/or is formed on a back side of a connecting portion (42) of the retaining element (30) opposite the latching portion (34).

## Revendications

1. Dispositif (14) pour compenser des tolérances entre deux composants à relier au moyen d'une vis de liaison, comprenant un élément de base (16), un élément de compensation (18) qui peut être sorti de l'élément de base (16), l'élément de base (16) et l'élément de compensation (18) formant un passage (20) pour la vis de liaison, lequel définit une direction axiale, et un élément de retenue (30) pour retenir l'élément de base (16), l'élément de retenue (30) formant une portion d'enclenchement (34) pour l'enclenchement sur un élément d'écrou (26) prévu pour la vis de liaison,
**caractérisé en ce que**
la portion d'enclenchement (34) est réalisée en forme de C, vue en coupe transversale, et comprend deux bras d'enclenchement (36) espacés l'un de l'autre et définissant entre eux un logement pour l'élément d'écrou (26), qui sont réalisés ou montés de manière élastique et qui, lors de l'enfilement en direction radiale sur l'élément d'écrou (26), peuvent être écartés à l'encontre d'une force de rappel pour recevoir l'élément d'écrou (26).

2. Dispositif (14) selon la revendication 1,
**caractérisé en ce que**
la portion d'enclenchement (34) s'étend transversalement, en particulier à angle droit, par rapport à la direction axiale.

3. Dispositif (14) selon l'une au moins des revendications précédentes, **caractérisé en ce que**
l'élément de retenue (30) est réalisé en forme de C, vu en coupe longitudinale,
et/ou l'élément de retenue (30) forme un espace de réception s'étendant radialement pour recevoir l'un des composants (24).

4. Dispositif (14) selon l'une au moins des revendications précédentes, **caractérisé en ce que**
la portion d'enclenchement (34), vue dans la direction axiale, est espacée d'une portion de retenue (32) de l'élément de retenue (30) dans laquelle est retenu l'élément de base (16).

5. Dispositif (14) selon la revendication 4,
**caractérisé en ce que**
la portion d'enclenchement (34) et/ou la portion de retenue (32) est ou sont pourvues de biseaux d'insertion (41).

6. Dispositif (14) selon la revendication 4 ou 5,
**caractérisé en ce que**
la portion d'enclenchement (34) et la portion de retenue (32) sont reliées entre elles par une portion de liaison (42).

7. Dispositif (14) selon la revendication 6,
**caractérisé en ce que**
la portion de liaison (42) s'étend dans la direction axiale.

8. Dispositif (14) selon la revendication 6 ou 7,
**caractérisé en ce que**
la portion de liaison (42) est de forme sensiblement parallélépipédique.

9. Dispositif (14) selon l'une au moins des revendications 6 à 8, **caractérisé en ce que**
la portion de liaison (42) forme des éléments de guidage (52) qui font saillie sur des faces latérales opposées.

10. Dispositif (14) selon la revendication 9,
**caractérisé en ce que**
deux éléments de guidage (52) espacés axialement sont formés sur chaque face latérale.

11. Dispositif (14) selon la revendication 9 ou 10,
**caractérisé en ce que**
l'un au moins des éléments de guidage (52) est réalisé en forme de prisme ou de toit en croupe.

12. Dispositif (14) selon l'une au moins des revendications précédentes, **caractérisé en ce que**
l'élément de retenue (30) est réalisé d'un seul tenant et/ou présente un matériau plastique et/ou est une pièce moulée par injection.

13. Dispositif (14) selon l'une au moins des revendications précédentes, **caractérisé en ce que**
un insert ferromagnétique (50) est encastré dans l'élément de retenue (30), en particulier dans une portion de liaison (42) de l'élément de retenue (30) ; et/ou
l'élément de retenue (30) présente une rainure en T (44), en particulier qui s'étend dans la direction axiale et/ou qui est formée sur une face arrière, opposée à la portion d'enclenchement (34), d'une portion de liaison (42) de l'élément de retenue (30).
